# EUROPÄISCHE PATENTSCHRIFT

(11) **EP 3 365 583 B1**
(45) Veröffentlichungstag und Bekanntmachung des Hinweises auf die Patenterteilung: **04.12.2019**
(21) Anmeldenummer: 16777667.3
(22) Anmeldetag: 04.10.2016
(51) Int. Cl.: F16J 1/16

(54) **KOLBEN**
PISTON
PISTON

(30) Priorität: 19.10.2015 DE 102015220261
(43) Veröffentlichungstag der Anmeldung: 29.08.2018
(73) Patentinhaber: Mahle International GmbH, 70376 Stuttgart (DE)
(72) Erfinder: RUDI, Jürgen, 70376 Stuttgart (DE); BRAIG, Ralf, 73614 Schorndorf (DE)
(74) Vertreter: BRP Renaud & Partner mbB Rechtsanwälte Patentanwälte Steuerberater
(86) Internationale Anmeldenummer: PCT/EP2016/073606
(87) Internationale Veröffentlichungsnummer: WO 2017/067778

(56) Entgegenhaltungen:
- DE-A1-102007 060 473
- DE-A1-102012 022 913

## Beschreibung

Die vorliegende Erfindung betrifft einen Kolben für einen Verbrennungsmotor mit zwei Bolzennaben zur Aufnahme eines Kolbenbolzens gemäß dem Oberbegriff des Anspruchs 1.

Aus der DE 1 650 206 A ist ein gattungsgemäßer Kolben für einen Verbrennungsmotor mit Bolzenbohrungen zur Aufnahme eines Kolbenbolzens bekannt, wobei die Bolzennaben zur Lastoptimierung queroval zur Längsachse des Kolbens ausgebildet sind.

Aus der DE 10 2012 022 913 A1 ist ein gattungsgemäßer Kolben für einen Verbrennungsmotor mit einer Bolzennabe zur Aufnahme eines Kolbenbolzens bekannt. Dabei weist die Bolzennabe eine bei 180° angeordnete Nadirtasche auf.

Befindet sich ein Kolben eines Verbrennungsmotors im oberen Totpunkt (OT), wirkt eine hohe Massenkraft auf eine Bolzennabe, insbesondere im unteren Bereich, das heißt im Nadirbereich, ein. Ein Anreißen der Bolzennabe kann dabei vergleichsweise schnell zu einem Totalausfall des Verbrennungsmotors führen.

Bisher wurde diesem Problem dadurch entgegengewirkt, dass man die Wandstärken um die Bolzennaben herum aufdickte, womit jedoch in unerwünschter Weise gleichzeitig ein erhöhtes Gewicht und dadurch wiederum höhere Massenkräfte einhergehen. Eine weitere Möglichkeit besteht darin, die Formgebung in der Nabe asymmetrisch auszuführen, was jedoch aufgrund der komplizierten Fertigung im Vergleich zu einer einfachen Bohrung zu erhöhten Produktionskosten führt.

Die vorliegende Erfindung beschäftigt sich daher mit dem Problem, für einen Kolben der gattungsgemäßen Art eine verbesserte oder zumindest eine alternative Ausführungsform anzugeben, die sich insbesondere durch eine kostengünstige Herstellung und zugleich eine erhöhte Belastbarkeit auszeichnet.

Dieses Problem wird erfindungsgemäß durch den Gegenstand des unabhängigen Anspruchs 1 gelöst. Vorteilhafte Ausführungsformen sind Gegenstand der abhängigen Ansprüche.

Die vorliegende Erfindung beruht auf dem allgemeinen Gedanken, in einem Nadirbereich einer Bolzennabe eine Nadirtasche vorzusehen, welche sich lediglich über einen Teil der Nabenlänge im Nadir erstreckt und dadurch in der Lage ist, eine Krafteinleitung von einem Bolzennabenrand weg in Richtung der Mitte der Bolzennabe zu verlagern. Der erfindungsgemäße Kolben für einen Verbrennungsmotor weist hierbei zwei Bolzennaben zur Aufnahme eines Kolbenbolzens auf, wobei die Bolzennaben jeweils bei α = 180°, das heißt im Nadir, eine Nadirtasche aufweisen, die sich von einer Kolbenachse, das heißt von der Mitte heraus, nach außen erstrecken und dabei - wie eingangs erwähnt - lediglich über einen Teil der Länge der Bolzennabe im Nadir verlaufen. Durch die Verlagerung des Krafteinleitungspunktes findet dabei eine Harmonisierung der Spannungen statt, die zu einer deutlichen Spannungsreduzierung führt. Dadurch erhöht sich die Lebensdauer der Bolzennabe deutlich. Bei gleichbleibender Lebensdauer können durch die Nadirtasche die Wandstärken der Nabe reduziert werden wodurch sich signifikante Gewichtseinsparungen erreichen lassen, wodurch sich wiederum die Massenkräfte des Kolbens beim Betrieb reduzieren. Bleibt ein Querschnitt der Bolzennabe unverändert, so können mit den erfindungsgemäßen Nadirtaschen höhere Spannungen und damit eine höhere Lebensdauer erreicht werden. Der Bolzen verformt sich durch die Einwirkung der Massenkraft "bananenförmig", wobei sich die äußeren Ränder des Kolbenbolzens näher am Kolbenboden befinden als in der Bolzenmitte. Dadurch entstehen hohe Spannungen an der inneren Kante der Bolzennabe. Durch die Nadirtasche wird die Kante aus dem Kontakt des Kolbenbolzens genommen und der Krafteingriffspunkt weg von der Kante in Richtung Nabenmitte (in Längsrichtung der Bolzennabe gesehen) verlagert. Erfindungsgemäß weicht dabei eine Bolzennabenachse 0,1 - 1,0 mm von der Kolbenachse ab.
Bei einer vorteilhaften Weiterbildung der erfindungsgemäßen Lösung erstrecken sich die Nadirtaschen über lediglich 10 - 75 % der Länge der Bolzennaben. Wichtig hierbei ist vor allem, dass die Nadirtasche nicht über die gesamte Länge der Bolzennabe verläuft, sondern lediglich über einen gewissen Teil, wodurch erreicht werden kann, dass dort wo die Nadirtaschen vorgesehen sind, keine Krafteinleitung durch den Kolbenbolzen erfolgt.

Bei einer weiteren vorteilhaften Ausführungsform der erfindungsgemäßen Lösung weisen die Nadirtaschen eine Tiefe zwischen 0,1 und 1,0 mm auf. Bei einer Tiefe von bis zu 1 mm lassen sich Gewichtseinsparungen erzielen, die sich besonders günstig auf die Massenkräfte im Betrieb des Kolbens bzw. eines damit ausgestatteten Verbrennungsmotors auswirken.

Bei einer weiteren vorteilhaften Ausführungsform der erfindungsgemäßen Lösung nimmt die Tiefe der Nadirtaschen von der Bolzenachse in Richtung zu einer Nabenaußenseite nach außen hin ab. Hierdurch kann insbesondere eine reduzierte Kerbwirkung erreicht werden.

Bei einer weiteren vorteilhaften Ausführungsform der erfindungsgemäßen Lösung erstrecken sich die Nadirtaschen über einen Umfangswinkel zwischen 30 und 130° im Bereich des Nadirs. Je nach gewünschtem Umfangswinkel können damit einhergehend folgende Effekte erzielt werden: Bei einem vergleichsweise großen Umfangswinkel kann beispielsweise ein flaches Ansteigen und Abfallen von der die Nadirtasche umgebenden Nabenfläche erfolgen, wodurch insbesondere ein deutlich stumpferer Winkel im Übergang zwischen der Nabenfläche und der Nadirtasche erreicht werden kann, wobei derartige stumpfe Winkel besonders vorteilhaft für eine Kerbwirkung sind.

Die geometrischen Bedingungen (Länge 10 - 75%; Tiefe 0,1 - 1,0mm; Umfangswinkel 30 - 130°) beschreiben gemeinsam die Größe der Nadirtasche. Beim Erreichen der oberen Grenze (große Nadirtasche) ist die Lagerung des Kolbenbolzens nicht mehr gegeben, wodurch es zu Geräuschproblemen kommen kann, während beim Erreichen der unteren Grenze (kleine Nadirtasche) die Wirksamkeit derselben verloren geht. Das Optimum der Nadirtasche liegt zwischen der oberen und unteren Grenze.

Bei einer weiteren vorteilhaften Ausführungsform der erfindungsgemäßen Lösung weisen die Bolzennaben eine überlagerte Querovalität auf. Eine derartige Querovalität zeichnet sich beispielsweise dadurch aus, dass die Bolzennabe im Zenit kreiszylindrisch und bei α ca. 90° bzw. 270°, das heißt am Äquator, oval mit einem Ölhaltevolumen ausgestattet ist. Ein Übergang zwischen dem Äquator und dem Zenit sollte dabei vorzugsweise ohne Kanten verlaufen. Durch die spezielle Ausführungsform der Bolzennaben wird die Krafteinleitung in den Nabenzenit gelegt, wodurch die Umfangsspannungen in der Nabe reduziert werden und dadurch die Belastbarkeit der Nabe steigt. Durch eine solche querovale Ausbildung kann auch eine deutlich verbesserte Schmierung des Bolzens erzielt werden, als dies beispielsweise bei einer rein zylindrischen Bolzennabe möglich ist.

Bei einer weiteren vorteilhaften Ausführungsform der erfindungsgemäßen Lösung weisen die Bolzennaben eine umlaufende Schmierrille auf. Durch eine derartige Schmierrille ist eine besonders gute Schmierung der Nabe und des Bolzens möglich, wodurch ein leichtgängiger Lauf und dadurch eine hohe Lebenserwartung erreicht werden können.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Dabei zeigen, jeweils schematisch,
- Fig. 1: eine geschnittene Ansicht auf einen erfindungsgemäßen Kolben,
- Fig. 2: eine Detaildarstellung aus Fig. 1 im Bereich einer Nadirtasche,
- Fig. 3: eine weitere Schnittdarstellung durch den erfindungsgemäßen Kolben im Bereich einer Bolzennabe mit Draufsicht auf die erfindungsgemäße Nadirtasche,
- Fig. 4: eine weitere Schnittdarstellung durch den erfindungsgemäßen Kolben,
- Fig. 5: ebenfalls eine Schnittdarstellung durch den erfindungsgemäßen Kolben.

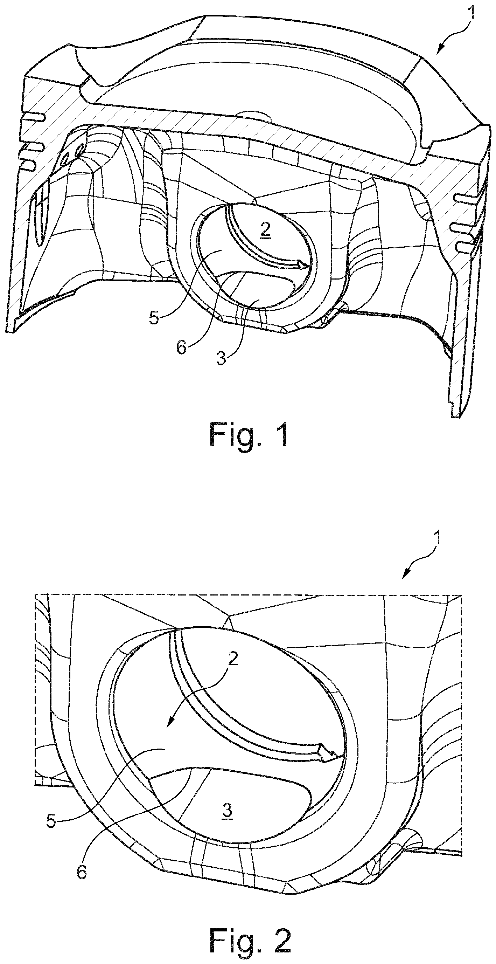

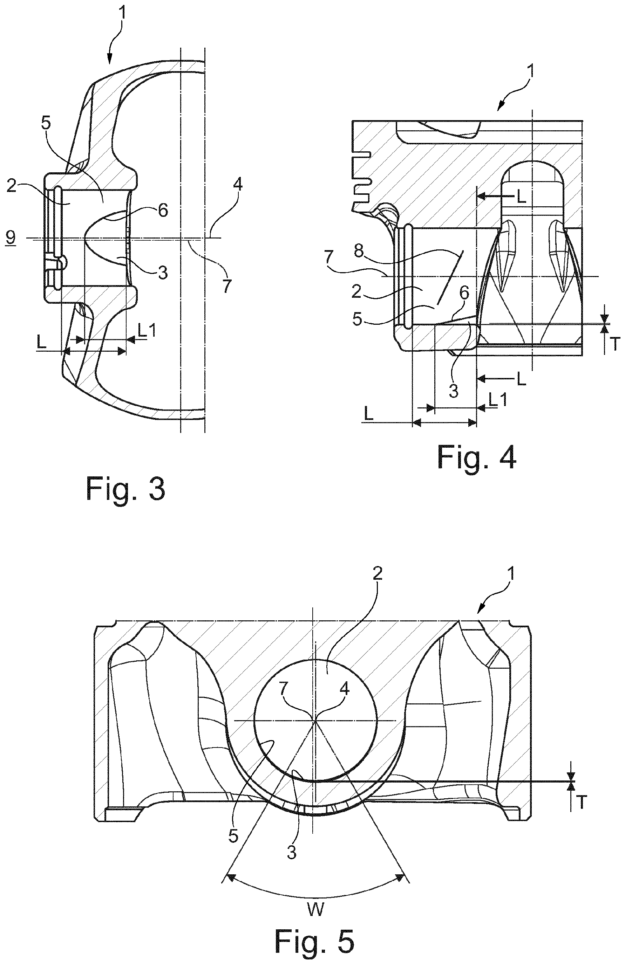

Entsprechend den Fig. 1 - 5, weist ein erfindungsgemäßer Kolben 1 für einen im Übrigen nicht gezeigten Verbrennungsmotor zwei Bolzennaben 2 auf, wovon in den Fig. 1 - 3 und 5 lediglich eine gezeigt ist, wobei in den Bolzennaben 2 bei montiertem Verbrennungsmotor ein Kolbenbolzen zur Befestigung eines Pleuels am Kolben 1 aufgenommen ist. Erfindungsgemäß weisen nun die Bolzennaben 2 jeweils bei α = 180° (Nadir) eine Nadirtasche 3 auf, die sich von einer Kolbenachse 4 (vergleiche die Fig. 4 und 5) nach außen erstreckt und lediglich über einen Teil, nämlich über eine Länge L1 der gesamten axialen Länge L der Bolzennabe 2 im Nadir verlaufen.

Betrachtet man beispielsweise die Fig. 1 - 4, so kann man erkennen, dass sich die Nadirtaschen 3 über eine Länge L1 von ca. 60 % der Länge L der Bolzennabe 3 erstrecken. Eine Tiefe T der Nadirtaschen 3 beträgt dabei zwischen 0 und 1,0 mm, wobei die Tiefe T im Nadir, das heißt bei α = 180° gemessen ist. Zu einer umliegenden Nabenfläche 5 hin nimmt die Tiefe T ab, ebenso wie von der Kolbenachse 4 nach außen. Ein Übergang zwischen der Nadirtasche 3 und der diese umgebenden Nabenfläche 5 wird dabei von einem parabelförmigen Rand 6 (vergleiche die Fig. 1-4) beschrieben. Je geringer die Tiefe T der Nadirtasche 3 im Nadir selbst ist, umso stumpfer ist der Übergangswinkel am Rand 6.

Betrachtet man die Fig. 5, so kann man erkennen, dass eine Bolzennabenachse 7 in Horizontalrichtung von der Kolbenachse 4 abweicht, und zwar vorzugsweise zwischen 0,1 und 1 mm. Dies bietet den großen Vorteil, dass das Anlegeverhalten des Kolbens im Zylinder klar definiert wird, wodurch die Akustik positiv beeinflusst werden kann. Ein Versatz der Bolzennabenachse 7 zur Kolbenachse 4 (Desachsierung) bewirkt ein geändertes Anlageverhalten des Kolbens 1 beim Seitenwechsel und beeinflusst die Seitenkräfte und Aufschlagimpulse entscheidend. Durch Berechnung der Kolbenbewegung lassen sich die Lage und Größe des Versatzes zur Kolbenachse 4 optimieren und so das Kolbenlaufgeräusch und die Kavitationsgefahr an der Zylinderlaufbuchse erheblich vermindern.

Bei einer weiteren vorteilhaften Ausführungsform der erfindungsgemäßen Lösung erstrecken sich die Nadirtaschen 3 über einen Umfangswinkel W (vergleiche Fig. 5) zwischen 30° und 130°. Durch die Größe des Umfangswinkels W kann indirekt Einfluss auf den Krafteinleitungspunkt eines Bolzens in die Nabenfläche 5 genommen werden, da beispielsweise je größer der Umfangswinkel W und je tiefer die Tiefe T der Nadirtasche 3 ist, umso weiter wird ein Krafteinleitungspunkt in Richtung eines Sprengringes verlagert. Bei einer schwimmenden Bolzenlagerung wird der Kolbenbolzen nur axial durch Sprengringe in der Bolzennabe gehalten, während bei einem Schrumpfsitz, der Kolbenbolzen am Pleuel aufgeschrumpft, also fest, ist und sich nur in der Bolzennabe bewegen kann. Bei einem Schrumpfsitz sind demzufolge keine Sprengringe erforderlich.

Bei einer weiteren vorteilhaften Ausführungsform der erfindungsgemäßen Lösung sind die Bolzennaben 2 symmetrisch oder asymmetrisch ausgebildet und besitzen beispielsweise eine überlagerte Querovalität und/oder eine überlagerte Hochovalität. Bei der Hochovalität erfolgt die Krafteinleitung links und rechts außerhalb des Zenits wodurch sich eine Spannungsreduzierung am Boden ergibt.

Zweckmäßig weisen die Bolzennaben 2 Öltaschen, insbesondere schmale gerade Öltaschen (slots), große gerade Öltaschen oder schräge große Öltaschen (side reliefs) auf. Durch derartige Öltaschen kann ein Ölhaltevolumen geschaffen werden, wodurch die Schmierung zwischen Bolzennabe 2 und Kolbenbolzen verbessert und damit die Lebensdauer des Kolbens 1 erhöht werden kann. Zur verbesserten Schmierung kann zusätzlich in der Bolzennabe 2 eine umlaufende Schmierrille 8 (vergleiche Fig. 4) vorgesehen sein.

Mit dem erfindungsgemäßen Kolben 1 und insbesondere den im Nadirbereich erfindungsgemäß vorgesehenen Nadirtaschen 3 lässt sich ein Krafteinleitungspunkt insbesondere im oberen Totpunkt (OT) des Kolbens 1, in welchem eine hohe Massenkraft auf die Bolzennabe 2 einwirkt, verschieben und dadurch eine Harmonisierung der Spannungen erreichen, die zu einer deutlichen Spannungsreduzierung führt. Eine derartige deutliche Spannungsreduzierung wiederum bewirkt eine deutliche Steigerung der Lebensdauer des erfindungsgemäßen Kolbens 1.

Üblicherweise ist die erfindungsgemäße Nadirtasche 3 nur an der Innenseite, also zum Kolbeninneren vorgesehen, wobei es selbstverständlich auch möglich ist, diese auch außen vorzusehen, insbesondere auch als Außenformbohrung.

Generell lassen sich durch die erfindungsgemäßen Nadirtaschen 3 folgende weitere Vorteile erzielen:
- eine bessere Ölversorgung,
- eine Optimierung der Reibleistung durch geringere Kontaktfläche und bessere Ölversorgung,
- eine Kostensenkung sowie ein geringeres Gewicht, da die Wandstärken durch die bessere Krafteinleitung dünner ausgeführt werden können.

## Patentansprüche

1. Kolben (1) für einen Verbrennungsmotor mit zwei Bolzennaben (2) zur Aufnahme eines Kolbenbolzen,
wobei die Bolzennaben (2) jeweils bei α = 180° (Nadir) eine Nadirtasche (3) aufweisen, die sich von einer Kolbenachse (4) aus nach außen erstrecken und deren Länge (L1) lediglich einen Teil der Länge (L) der Bolzennabe (2) beträgt,.
**dadurch gekennzeichnet,**
**dass** eine Bolzennabenachse (7) 0,1 - 1,0 mm von der Kolbenachse (4) abweicht.

2. Kolben nach Anspruch 1,
**dadurch gekennzeichnet,**
**dass** sich die Nadirtaschen (3) über 10 - 75% der Länge (L) der Bolzennaben (2) erstrecken.

3. Kolben nach Anspruch 1 oder 2,
**dadurch gekennzeichnet,**
**dass** die Nadirtaschen (3) eine Tiefe von 0,1 < T < 1,0 mm aufweisen.

4. Kolben nach einem der Ansprüche 1 bis 3,
**dadurch gekennzeichnet,**
**dass** die Tiefe (T) der Nadirtaschen (3) von der Kolbenachse (4) nach außen abnimmt.

5. Kolben nach einem der Ansprüche 1 bis 4,
**dadurch gekennzeichnet,**
**dass** die Bolzennaben (2) als symmetrische oder asymmetrische Formnabenbohrungen ausgebildet sind.

6. Kolben nach einem der Ansprüche 1 bis 5,
**dadurch gekennzeichnet,**
**dass** sich die Nadirtaschen (3) über einen Umfangswinkel von 30° < W < 130° erstrecken.

7. Kolben nach einem der Ansprüche 1 bis 6,
**dadurch gekennzeichnet,**
**dass** die Bolzennaben (2) eine überlagerte Querovalität und/oder Hochovalität aufweisen.

8. Kolben nach einem der Ansprüche 1 bis 7,
**dadurch gekennzeichnet,**
**dass** die Bolzennaben (2) Öltaschen, insbesondere schmale gerade Öltaschen, große gerade Öltaschen oder schräge große Öltaschen, aufweisen.

9. Kolben nach einem der Ansprüche 1 bis 8,
**dadurch gekennzeichnet,**
**dass** die Bolzennaben (2) eine umlaufende Schmierrille (8) aufweisen.

## Claims

1. Piston (1) for an internal combustion engine having two gudgeon-pin bosses (2) for the reception of a piston bolt,
wherein the gudgeon-pin bosses (2) have in each case when α = 180° (nadir) a nadir pocket (3) which extend from a piston axis (4) to the outside and the length (L1) of which is only a part of the length (L) of the gudgeon-pin boss (2),
**characterised in**
**that** a gudgeon-pin boss axis (7) deviates 0.1 - 1.0 mm from the piston axis (4).

2. Piston according to claim 1,
**characterised in**
**that** the nadir pockets (3) extend over 10 - 75% of the length (L) of the gudgeon-pin boss (2).

3. Piston according to claim 1 or 2,
**characterised in**
**that** the nadir pockets (3) have a depth of 0.1 < T < 1.0 mm.

4. Piston according to any of claims 1 to 3,
**characterised in**
**that** the depth (T) of the nadir pockets (3) decreases from the piston axis (4) to the outside.

5. Piston according to any of claims 1 to 4,
**characterised in**
**that** the gudgeon-pin bosses (2) are formed as symmetrical or asymmetrical form boss bores.

6. Piston according to any of claims 1 to 5,
**characterised in**
**that** the nadir pockets (3) extend across a circumferential angle of 30° < W < 130°.

7. Piston according to any of claims 1 to 6,
**characterised in**
**that** the gudgeon-pin bosses (2) have a superimposed transverse ovality and/or vertical ovality.

8. Piston according to any of claims 1 to 7,
**characterised in**
**that** the gudgeon-pin bosses (2) have oil pockets, in particular narrow straight oil pockets, large straight oil pockets or oblique large oil pockets.

9. Piston according to any of claims 1 to 8,
**characterised in**
**that** the gudgeon-pin bosses (2) have a circumferential lubrication channel (8).

## Revendications

1. Piston (1) pour un moteur à combustion interne avec deux moyeux de boulon (2) pour la réception d'un boulon de piston,
dans lequel les moyeux de boulon (2) présentent respectivement pour α = 180° (nadir) une poche de nadir (3), qui s'étendent d'un axe de piston (4) vers l'extérieur et dont la longueur (L1) n'est qu'une partie de la longueur (L) du moyeu de boulon (2),
**caractérisé en ce**
**qu'**un axe de moyeu de boulon (7) diverge de 0,1 - 1,0 mm de l'axe de piston (4).

2. Piston selon la revendication 1,
**caractérisé en ce**
**que** les poches de nadir (3) s'étendent sur 10 - 75 % de la longueur (L) des moyeux de boulon (2).

3. Piston selon la revendication 1 ou 2,
**caractérisé en ce**
**que** les poches de nadir (3) présentent une profondeur de 0,1 < T < 1,0 mm.

4. Piston selon l'une quelconque des revendications 1 à 3,
**caractérisé en ce**
**que** la profondeur (T) des poches de nadir (3) diminue de l'axe de piston (4) vers l'extérieur.

5. Piston selon l'une quelconque des revendications 1 à 4,
**caractérisé en ce**
**que** les moyeux de boulon (2) sont réalisés en tant qu'alésages de moyeu de moule symétriques ou asymétriques.

6. Piston selon l'une quelconque des revendications 1 à 5,
**caractérisé en ce**
**que** les poches de nadir (3) s'étendent sur un angle circonférentiel de 30° < W < 130°.

7. Piston selon l'une quelconque des revendications 1 à 6,
**caractérisé en ce**
**que** les moyeux d'axe (2) présentent une ovalité transversale et/ou ovalité verticale superposée.

8. Piston selon l'une quelconque des revendications 1 à 7,
**caractérisé en ce**
**que** les moyeux de boulon (2) présentent des poches d'huile, en particulier des poches d'huile droites étroites, de grandes poches d'huile droites ou de grandes poches d'huile inclinées.

9. Piston selon l'une quelconque des revendications 1 à 8,
**caractérisé en ce**
**que** les moyeux de boulon (2) présentent une rainure de graissage périphérique (8).
